# EUROPEAN PATENT APPLICATION

(11) **EP 4 588 528 A1**
(43) Date of publication of application: **23.07.2025**
(21) Application number: 24153024.5
(22) Date of filing: 22.01.2024
(51) Int. Cl.: A62C 3/00, A62C 27/00

(54) **A STACKABLE CONTAINER FIRE SUPPRESSION MODULE**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to a stackable container fire suppression module configured to be retained in a stackable container, the stackable container fire suppression module comprises: a fire suppressant reservoir; an actuatable valve; and an outlet in communication with the actuatable valve. The actuatable valve is disposed to selectively isolate the fire suppressant reservoir from the outlet.

## Description

### TECHNICAL FIELD

The disclosure relates to a stackable container fire suppression module. More particularly, it relates to a stackable container fire suppression module configured to be retained in a stackable container, a method of forming an apparatus for an automated storage and retrieval system, and a method of suppressing fire in a stackable container for an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

As a safety measure, warehouses usually include fire detection and suppression systems. Detection systems detect conditions indicative of fire in the warehouse, such as smoke or heat. In response, the detection systems trigger alarms and/or fire suppression systems. Traditional warehouse fire suppression systems involve ceiling sprinklers supplying fire suppressant downward into the warehouse. In Europe, the configuration and operation of these ceiling sprinklers are governed by European standard EN 12845:2015, which prescribes a maximum clearance from a storage location and ceiling sprinklers, and minimum storage block and aisle sizes. When triggered, the alarm may call fire fighters to the warehouse to supply fire suppressant directly onto the fire from the warehouse aisles using a firehose.

However, existing fire suppression systems may not be susceptible to further improvement for automated storage and retrieval systems comprising a three-dimensional grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a perspective view of an apparatus suitable for use in the system of Fig. 1;
Fig. 5B shows a top view of the apparatus of Fig. 5A;
Fig. 6A shows a top view of a fire suppression module, including at least one tongue, suitable for use in apparatus of Fig. 5A;
Fig. 6B shows a perspective view of the fire suppression module of Fig. 6A;
Fig. 6C shows a reverse perspective view of the fire suppression module of Fig. 6A;
Fig. 6D shows a perspective view of an apparatus suitable for use in the system of Fig. 1 containing the fire suppression module of Fig. 6A;
Fig. 6E shows a top view of the apparatus of Fig. 6D;
Fig. 7A shows a side view of a fire suppression module, including at least one pressing member, suitable for use in the system of Fig. 1;
Fig. 7B shows a perspective view of the fire suppression module of Fig. 7A;
Fig. 7C shows a top view of the fire suppression module of Fig. 7A;
Fig. 7D shows a top view of the fire suppression module of Fig. 7A in a pressing position;
Fig. 7E shows a perspective view of the fire suppression module of Fig. 7A in a pressing position;
Fig. 7F shows a perspective view of an apparatus suitable for use in the system of Fig. 1 containing the fire suppression module of Fig. 7A;
Fig. 7G shows a top view of the apparatus of Fig. 7F;
Fig. 8 shows a flowchart of a method suitable for forming an apparatus suitable for the system of Fig. 1; and
Fig. 9 shows a flowchart of a method suitable for suppressing fire in the system of Fig. 1.

### DETAILED DESCRIPTION

In overview, the disclosure relates to a stackable container fire suppression module configured to be retained in a stackable container. The stackable container fire suppression module may be referred to as a fire suppression module for brevity. The stackable container fire suppression module includes a fire suppressant reservoir, that is, a reservoir containing fire suppressant. The fire suppressant reservoir acts as a source and store of fire suppressant. The stackable container fire suppression module also includes an actuatable valve and an outlet in communication with the actuatable valve. Accordingly, the actuatable valve is disposed to selectively isolate the fire suppressant reservoir from the outlet.

Since the fire suppression module is a stackable container fire suppression module configured to be retained in a stackable container, the fire suppression module allows fire suppressant to be supplied directly into stackable containers stored within a grid of an automated storage and retrieval system. Fire suppressant can therefore be delivered into containers otherwise less easily reached by externally supplied fire suppressant directly in densely packed automated storage and retrieval systems. The fire suppression module therefore provides an alternative quick response fire suppression solution that is suited for automated storage and retrieval systems. In particular, the fire suppression module provides an improvement over ceiling sprinklers, fluid from which may not reach every bin quickly, especially those located towards the centre of the densely packed three-dimensional grid.

Optionally, the actuatable valve is arranged to automatically actuate in response to an actuation condition, thereby enabling automatic fire suppressant discharge. Accordingly, fire suppressant can be delivered into the internal storage space of the stackable container without manual intervention. Advantageously therefore, the fire suppression module can deliver fire suppressant into the stackable container even when the stackable container is stored in the inaccessible grid of an automated storage and retrieval system. In these examples, the actuation condition may comprise one or more of: smoke detection, an elevation in temperature, flame detection, and/or a signal from a fire detection system.

The disclosure also relates to an apparatus for an automated storage and retrieval system. The apparatus includes the stackable container fire suppression module. The apparatus also includes the stackable container itself. The stackable container may otherwise be referred to as a storage container, bin, or container. The stackable container comprises an internal storage space such that, with the fire suppression module retained in the stackable container, the outlet thereof is disposed to deliver fire suppressant from the fire suppressant reservoir into the internal storage space upon actuation of the actuatable valve. Here, the fire suppression module may comprise a retaining member engageable with a cooperating portion of the stackable container. The retaining member allows easy, user-friendly, retention and securing of the fire suppression module in the stackable container. Notably, the retaining member being engageable with a cooperating portion of the container allows the fire suppression module to be retrofit into any containers already comprising the cooperating portion without redesigning the stackable container.

### Automated storage and retrieval system overview

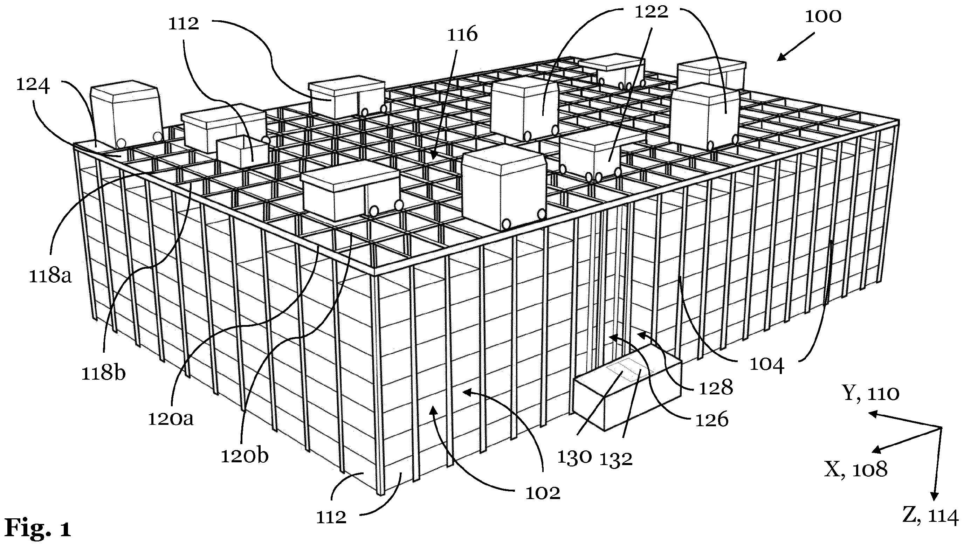

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

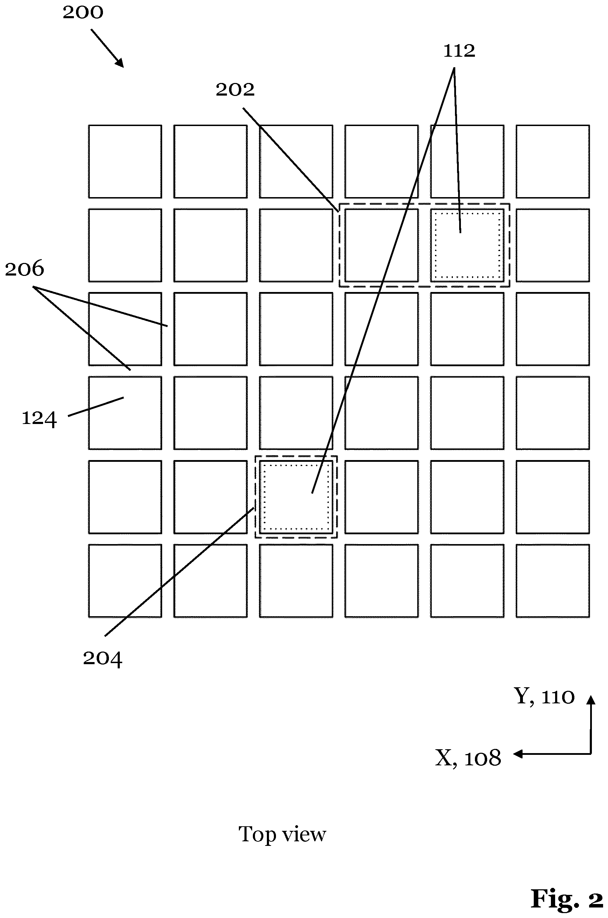

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

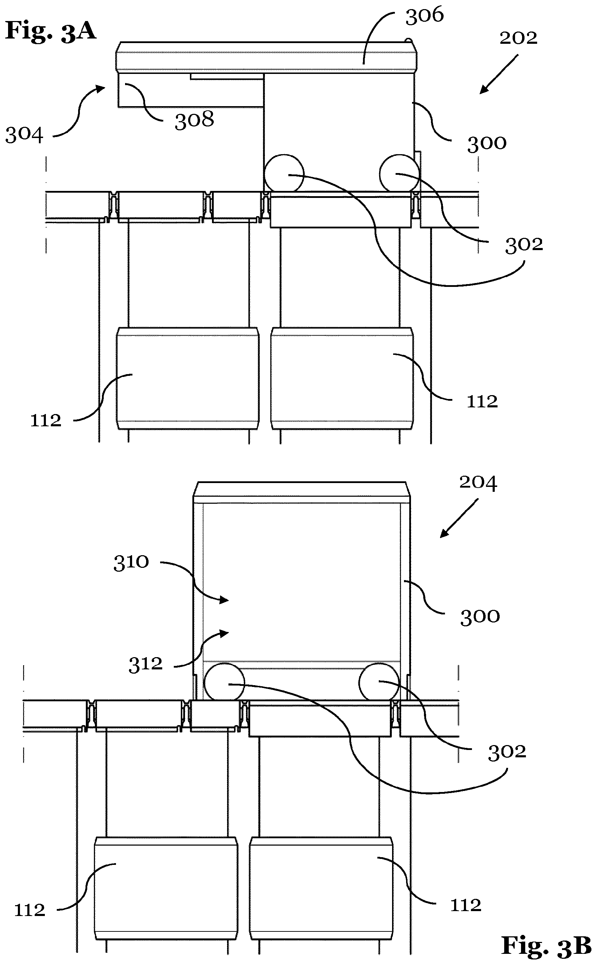

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

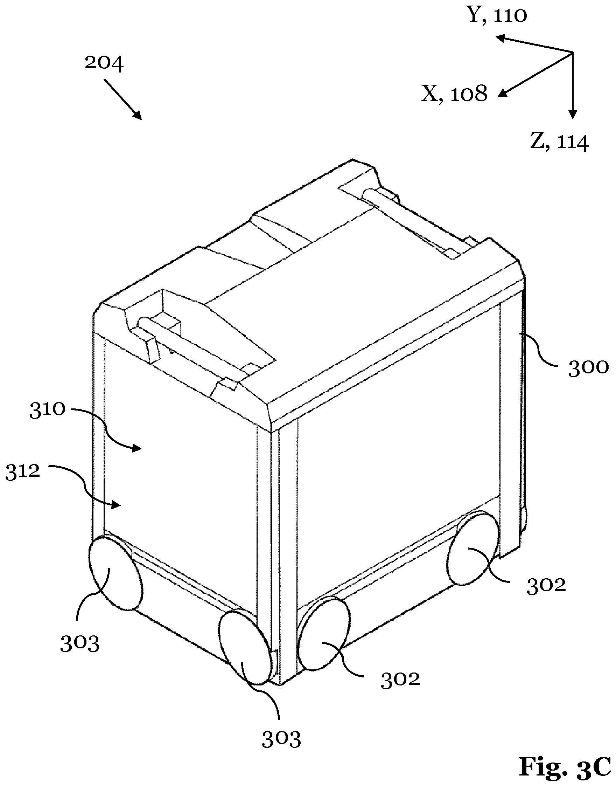

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

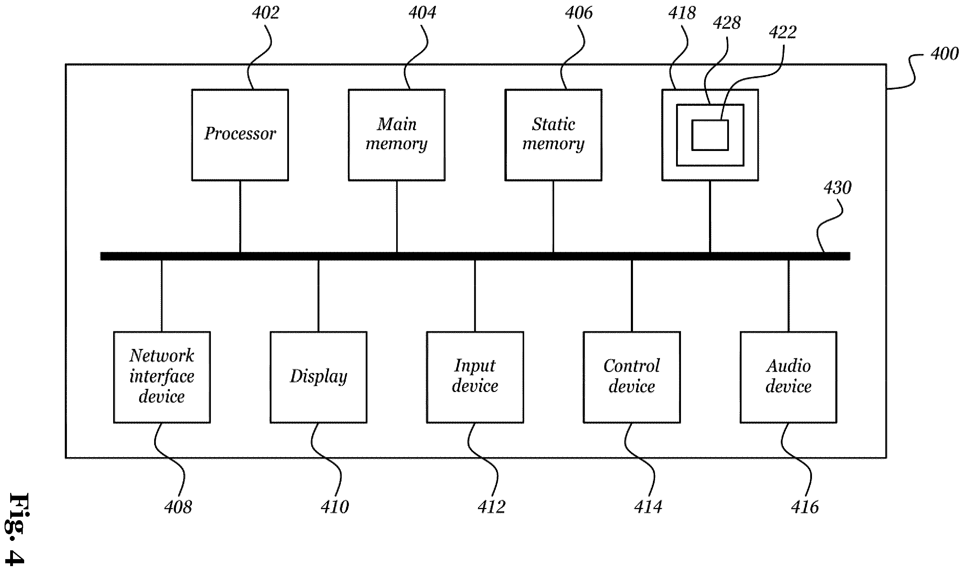

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Stackable container fire suppression modules

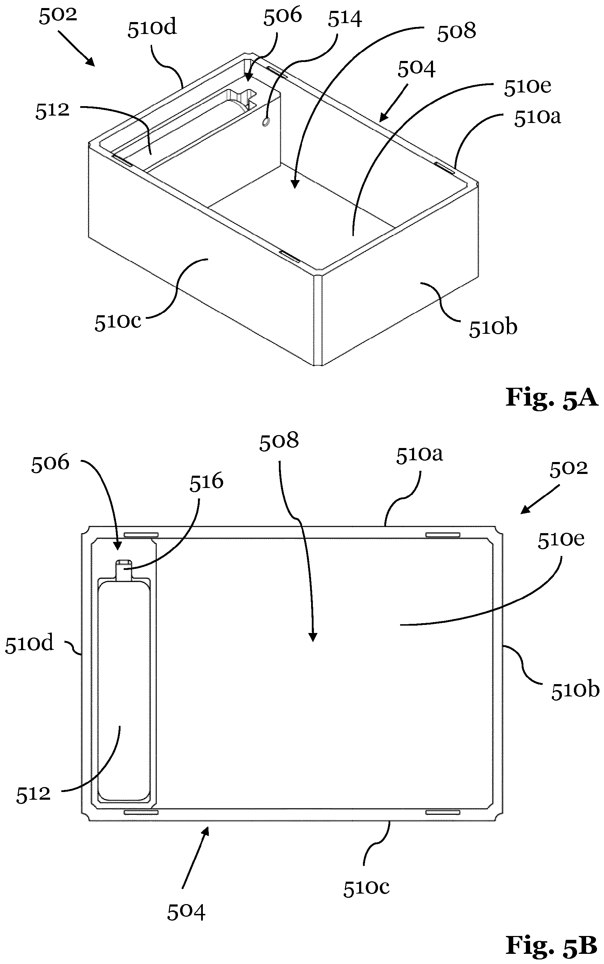

Referring to Figs. 5A and 5B, an apparatus 502 is respectively depicted in perspective view and top view. The apparatus 502 is suitable for use in an automated storage and retrieval system, such as the automated storage and retrieval system of Fig. 1. The apparatus can be used for suppressing fires in containers of the automated storage and retrieval system.

The apparatus 502 includes a container 504 and a fire suppression module 506. The container 504 is a storage container or bin, as described with respect to for instance Fig. 1. As such, the container 504 is stackable, preferably in a self-supporting manner. For instance, the container 504 may be mutually self-stackable with corresponding containers. The container 504 may be provided as part of an automated storage and retrieval system. The fire suppression module 506 is retainable in the container 504. Accordingly, the fire suppression module may be retrofit into a container pre-provided as part of the automated storage and retrieval system. Accordingly, the fire suppression module 506 may be produced, marketed and provided independently of (and possibly subsequent to) the container 504 and the automated storage and retrieval system.

As shown, the container 504 includes an internal storage space 508. The internal storage space 508 is defined by the sidewalls 510a, 510b, 510c, 510d and base 510e of the container 504. When a second container is stacked on top of the container 504, the internal storage space is further defined by the base of the second container. As shown, the container may take a generally cubic or cuboid shape. Alternatively, the container 504 may take any other shape, such as any regular or irregular polygon. Preferably, the container 504 is shaped to self-tessellate (i.e., tesselate substantially flush with like-containers) to maximise the container-storage capacity in the grid 100, thereby reducing the amount of space between the storage columns, outside the storage volume formed by containers. Triangles and hexagons self-tessellate. Therefore, the container 504 may be triangular prismatic - having three sidewalls and a base - or hexagonal prismatic - having six sidewalls and a base.

The container 504 may, in particular, be a container in which flammable goods are stored. As used herein, goods are considered flammable if they have a flash point less than 50°C above the ambient temperature in the automated storage and retrieval system, or if their flash point is at or below 60°C, at or below 50°C, at or below 40°C, or at or below 30°C. Containers 504 containing flammable goods may be stored in specified zones of the grid 100 for flammable goods. Different zones may be provided for goods with different degrees of flammability.

The fire suppression module 506 includes a fire suppressant reservoir 512, an actuatable valve, and an outlet 514. The actuatable valve is disposed to selectively isolate the fire suppressant reservoir 512 from the outlet 514. The actuatable valve is not shown in the figures and may be located within the fire suppression module 506. For instance, the actuatable valve may be located within any of: the outlet 514; a spout of the outlet 514; a head 516 of the reservoir 512 or of a fire suppressant cartridge; or any other location in a fluid channel between the reservoir 512 and the outlet 514.

The fire suppressant reservoir 512 holds fire suppressant. Accordingly, the fire suppressant reservoir 512 is the source of fire suppressant in the fire suppression module 506. In other words, prior to actuation of the actuatable valve, fire suppressant is stored in the fire suppressant reservoir 512. On activation of the actuatable valve, fire suppressant is supplied from the fire suppressant reservoir 512, potentially through the fluid channel between the reservoir 512 and the outlet 514 (if present), and out the outlet 514. As such, fire suppressant is discharged from the outlet 514 into the environment surrounding the fire suppression module 506. When the fire suppression module 506 is retained within the container 504, the surrounding environment is the internal storage space 508. In some examples, the reservoir 512 may be pressurised at a high pressure (e.g., a pressure higher than atmospheric pressure in the grid 100 or in the internal storage space 508) to facilitate fire suppressant propulsion on actuation. The reservoir 512 may be pressurised with any suitable propellant, such as nitrogen or carbon dioxide.

As shown, the fire suppressant reservoir 512 may include a (e.g., substantially) cylindrical or cubic body and a further (e.g., substantially) cylindrical or cubic head 516. Here, the body may hold the fire suppressant and the head 516 may couple to the outlet 514 or to a fluid channel between the reservoir 512 and the outlet 514. On the other hand, the fire suppressant reservoir 512 may be shaped differently according to the shape and/or configuration of the fire suppression module 506 and/or the container 504.

In some examples, the fire suppressant reservoir may be provided in a replaceable or refillable cartridge. The cartridge may include the head 516. Accordingly, after discharge, the fire suppression module 506 may be reused by replacing or refilling the cartridge. The fire suppressant reservoir need not be replaceable or refillable however and the fire suppression module 506 may instead be disposed or otherwise recycled after discharge.

The fire suppressant held in the fire suppressant reservoir 512 may be any agent (fluid or otherwise) suitable for suppressing, extinguishing or otherwise controlling fire. For instance, the fire suppressant may comprise at least one of: a dry chemical fire suppressant, such as monoammonium phosphate, sodium bicarbonate, potassium bicarbonate, or potassium chloride; a foam fire suppressant, such as aqueous film-forming foam, film-forming fluoroprotein, or compressed air foam; a wet chemical fire suppressant, such as potassium acetate, potassium carbonate, or potassium citrate; a clean fire suppressant (or an inert gas fire suppressant), such as halons, carbon dioxide, or inert gas; a dry powder fire suppressant, such as sodium chloride; a condensed aerosol fire suppressant; water; and/or any other suitable fire suppressant. Dry chemical fire suppressant, foam fire suppressant, and dry powder fire suppressant smother fires by forming a barrier between the fuel of the fire and the source of oxygen in the atmosphere. Wet chemical fire suppressant similarly forms a soapy film over the fuel. Clean, or gaseous, fire suppressant and condensed aerosol fire suppressant displace oxygen in the atmosphere surrounding a fire with carbon dioxide or other inert gasses. Water, when used as a fire suppressant, cools burning material. Preferably, the fire suppressant includes a foam fire suppressant.

The outlet 514 provides the site of fire suppressant discharge. In other words, the outlet 514 is arranged to provide the delivery of fire suppressant from the reservoir 512 and into the environment surrounding the fire suppression module 506. Accordingly, with the fire suppression module 506 retained in the container 504, the environment surrounding the fire suppression module 506 is the internal storage space 508. As such, the outlet 514 may be disposed to deliver fire suppressant from the fire suppressant reservoir into the internal storage space 508 upon actuation of the actuatable valve.

In some examples, the outlet 514 may include a nozzle, such as a fire suppression nozzle. A nozzle is a spout of the outlet 514 which allows the outlet 514 to direct and/or disperse the fire suppressant output. Similarly, a fire suppression nozzle is a nozzle suitable for delivering fire suppressant. As an example, the fire suppression nozzles may be a spray nozzle and/or a funnel-shaped horn nozzle. Spray nozzles are arranged to fragment the fluid into droplets and thereby distribute the fluid across a large surface area. Types of spray nozzle include fog nozzles, surface impingement nozzles, misting nozzles, sprinkler heads, and so on. Spray nozzles may fragment the fluid into droplets using dispersion elements at or near their aperture. As such, spray nozzles provide greater spread of fire suppressant throughout the internal storage space 508, which increases the surface area covered by fire suppressant and thereby increases the fire suppression effectiveness in the container 504.

The outlet 514 or fire suppression nozzle may alternatively comprise a vent, provided as an opening (e.g., a hole, aperture, slit or crack). When the actuatable valve is actuated, the vent provides direct fluid communication between the conduit and the grid. Accordingly, vents are a simple form of outlet which reduce the cost and complexity associated with fire suppression module 506 manufacture, thereby reducing the cost of replacing fire suppression module 506 after use. Outlet 514 comprising a vent is particularly useful for delivering gases to automated storage and retrieval systems. Accordingly, when the fire suppressant is a clean or gaseous fire suppressant, the fire suppressant may flood the internal storage space 508 from a vent to suffocate a fire.

As mentioned, the actuatable valve is disposed to selectively isolate the fire suppressant reservoir 512 from the outlet 514. Accordingly, the valve allows selective delivery of fire suppressant from the reservoir 512 to the outlet 514 (and therethrough into the internal storage space 508). In some examples, the actuatable valve is arranged to automatically actuate in response to an actuation condition. The actuation condition may include any of smoke detection, an elevation in temperature, flame detection, and/or a signal from a fire detection system.

An advantage of arranging the actuatable valve to actuate automatically is that the fire suppression module 506 can deliver fire suppressant into the container 504 without manual user involvement. As such, the actuatable valve can deliver fire suppressant into the container 504 at user-inaccessible positions, such as within the storage volume of the grid 100 described with respect to Fig. 1. Accordingly, the fire suppression module 506 described herein is particularly suited for containers stored within densely packed automated storage and retrieval systems accessible only to robots, such as the robots 122 described with respect to Figs. 1-3C. Another advantage of automatic actuation is that container fires can be suppressed with the container 504 stored in the grid 100. Accordingly, fire can be suppressed before the container 504 is transported by the robots 122. This isolates the fire, preventing both: fire spreading around the grid 100, and damage to the robots caused while otherwise transporting a container holding burning goods.

When the actuation conditions include smoke detection, the actuatable valve may be arranged to automatically actuate in response to the presence of smoke about the fire suppression module 506 and/or in the container 504. The fire suppression module 506 may therefore include a smoke detector - i.e., a detector suitable for detecting and configured to detect the presence of smoke. Responsive to detecting smoke, the smoke detector is arranged to send a trigger signal to the actuatable valve, triggering actuation. The trigger signal may be, for instance, a mechanical, electric, or electromagnetic signal. Alternatively, a smoke detector may be provided separate from the fire suppression module 506, and/or the actuatable valve may be arranged to actuate on direct interaction with smoke, independent of a dedicated smoke detector.

Smoke comprises any airborne particulates and gases emitted as a product of combustion, ignition or pyrolysis. As such, the composition of the smoke depends on the nature of the burning goods and the conditions of combustion. In some examples, smoke may include any of soot, ash, carbon, nitrogen oxides, sulphur dioxide, carbon dioxide, carbon monoxide, and/or hydrocarbons.

The smoke detector may include one or more of: a photoelectric or optical smoke detector; an ionisation smoke detector; and/or any other suitable type of smoke detector. Photoelectric or optical smoke detectors identify smoke in a sample by illuminating the sample with light and measuring, directly or indirectly, the amount by which the light is scattered or obscured by the sample. A high amount of scattering or obscuration indicates the presence of smoke. Ionisation smoke detectors use a radioisotope to ionise air and detect a change in voltage across ionised air due to smoke.

When the actuation conditions include an elevation in temperature, the actuatable valve may be arranged to automatically actuate in response to an elevation in temperature about the fire suppression module 506 and/or container 504 from the ambient temperature of the container 504 and/or grid 100. For instance, the actuatable valve may be arranged to automatically actuate in response to an elevation in temperature to a predetermined temperature. The actuatable valve may comprise a fusible element configured to actuate at the predetermined temperature. Alternatively, the actuatable valve may be arranged to actuate in response to a trigger signal from a temperature sensor (such as a thermocouple) of the fire suppression module 506. The trigger signal may be, for instance, a mechanical, electric, or electromagnetic signal.

In its unactuated state, a fusible element may rest in one or more of: the outlet 514; a spout of the outlet 514; a head 516 of the reservoir 512 or of a fire suppressant cartridge; or any other location in a fluid channel between the reservoir 512 and the outlet 514. Accordingly, the fusible element isolates the reservoir 512 from the outlet 514 by plugging or otherwise blocking the channel between the reservoir 512 and the outlet 514.

The fusible element actuates by fusing. For instance, the fusible element may fuse in response to an elevation in temperature about the fire suppression module 506 to the predetermined temperature. In some examples, the fusible element may comprise an outer casing with a lower melting point than the predetermined temperature such that the fusible element fuses by melting. In other examples, the fusible element may comprise a frangible liquid-containing bulb that is configured to break at the predetermined temperature. The predetermined temperature may depend on the contents of the container 504 and the ambient temperature of the grid 100 in which the container 504 is stored. For instance, the predetermined temperature may correspond to the combustion temperature or flash point of the goods stored in the container 504. The predetermined temperature may be at least 20°C or at least 40°C higher than the ambient temperature of the automated storage and retrieval system. The predetermined temperature may be at least 30°C, at least 50°C or at least 70°C.

As an example, the outlet 514 may include a sprinkler head or nozzle with a fusible element configured to actuate at a predetermined temperature. In its unactuated state, the fusible element rests in the aperture of the sprinkler head or nozzle to isolate the fire suppressant reservoir 512 from the surrounding environment (e.g., the internal storage space 508). Accordingly, when the temperature in the container 504 elevates to the predetermined temperature, the fusible element fuses, thereby allowing passage and discharge of fire suppressant from the reservoir 512 to the surrounding environment via the outlet 514.

When the actuation conditions include flame detection, the actuatable valve may be arranged to automatically actuate in response to the identification of a flame about the fire suppression module 506 and/or in the container 504. For instance, the fire suppression module 506 may include a flame detector - i.e., a detector suitable for detecting and configured to detect the presence of a flame. Responsive to the flame detector detecting a flame, the flame detector sends a trigger signal to the actuatable valve, triggering actuation. The trigger signal may be, for instance, a mechanical, electric, or electromagnetic signal. Alternatively, the fire suppression module 506 may include a camera in communication with a processor arranged to identify a flame in a video or photo feed from the camera using machine vision techniques. The processer may be remote from the fire suppression module 506, such as within a processing system described with respect to Fig. 4.

The flame detector may include one or more of: an optical flame detector, such as an ultraviolet frame detector, near IR array flame detector, infrared flame detector, infrared thermal camera, visible light sensor, and so on; an ionisation current flame detector; and/or a thermocouple flame detector. Optical flame detectors work by detecting the radiation emitted as a flame on ignition or during combustion. Ionisation current flame detectors measure the ionisation within the body of a flame using flame rectification whereby an AC current flows more easily in one direction when a voltage is applied. Thermocouple flame detectors detect a flame using a temperature dependant voltage across an electrical junction.

When the actuation conditions include a signal from a fire detection system, the actuatable valve may be arranged to automatically actuate in response to the signal. The signal may comprise any of the trigger signals otherwise discussed herein. Accordingly, responsive to the fire detection system detecting fire in or near the container 504, the fire detection system sends a signal to the actuatable valve, triggering actuation. The signal may be, for instance, a mechanical, electric, or electromagnetic signal.

The fire detection system may be local to the container 504, for instance the fire detection system may be located within the container 504. Similarly, the fire detection system may be local to the fire suppression module 506 and may include any of the smoke detectors, temperature sensors, and/or flame detectors otherwise described herein. Alternatively, the fire detection system may be external to the fire suppression module 506 and the container 504. For instance, the fire detection system may be located within the grid 100 or otherwise within the warehouse containing the automated storage and retrieval system. In these examples, the fire detection system may communicate the signal to the actuatable valve wirelessly, via any suitable transmitter at the fire detection system and receiver at the fire suppression module 506. For instance, the transmitter and receiver may be a radio transmitter and receiver. Advantageously, wirelessly communicating the signal to the actuatable valve provides a solution for fire suppression without requiring manual involvement that can operate in conjunction with independent fire detection systems within the warehouse and/or grid 100.

When the actuatable valve is arranged to actuate (directly) on interaction with smoke independent of any smoke detector, or comprises a fusible element, the actuatable valve may be considered a passive actuator. Passive actuators do not require power sources and are therefore particularly useful in passive fire suppression modules. Passive fire suppression modules are particularly advantageous in the automated storage and retrieval systems described herein by obviating active fire detector installation throughout the grid, which can be complex and/or expensive and require consistent maintenance. Passive fire suppression modules also obviate power (e.g., batteries) in the fire suppression module 506 and therefore reduce the maintenance requirements thereof.

Alternatively, when the actuatable valve includes smoke detectors, temperature sensors, and/or flame detectors, a power source (such as a battery) may be provided in the fire suppression module 506 to power operation thereof. The power source may also power fire suppressant propulsion.

Further, when the actuatable valve automatically actuates in response to an actuation condition from about the fire suppression module 506 and/or within the container 504, the fire suppression module 506 can be retained in a container 504 without otherwise reconfiguring the grid 100. In other words, no additional wiring or signal generators need be installed into the grid 100. Here, the fire suppression module 506 may also be retrofit into existing containers of the storage system.

The fire suppression module 506 may further include a valve actuation indicator (not shown in the figures). The valve actuation indicator may include any means suitable for indicating valve actuation - i.e., that the valve has been actuated - to a user. Accordingly, the valve actuation indicator is arranged to indicate, to a user of the automated storage and retrieval system, whether the valve has been actuated. The indication therefore informs whether fire suppressant has been discharged from the outlet 514 into the container. In other words, the indication informs a user that a fire has been detected and suppressed within a container 504, while in the grid 100 or otherwise.

Further, the valve actuation indicator may also indicate within which container 504, or within which zone or section of the grid 100, the actuated valve is retained. Accordingly, the user can retrieve the container 504 retaining the actuated valve from the automated storage and retrieval system. On receipt, the user may therefore inspect, dispose of and/or replace the burnt goods stored therein. The user may also refill or replace the fire suppression module 506 and/or the cartridge thereof.

The valve actuation indicator may comprise one or more of: a speaker, an alarm, a visual indicator, and/or a transmitter arranged to communicate with a user workstation of the automated storage and retrieval system.

When the valve actuation comprises a speaker or an alarm, a user may be made aware of valve actuation by sounding the speaker or alarm. The speaker or alarm may audibly identify which container 504 retains fire suppression module 506 with the actuated valve. Alternatively, the speaker or alarm may audibly identify a location, e.g., a zone of the grid 100, at which the container 504 is stored. The speaker or alarm may be a fire alarm, in which case the speaker or alarm may initiate an evacuation of a warehouse housing the automated storage and retrieval system. In some examples, the speaker or alarm may be located outside the grid 100, e.g., within the warehouse containing the automated storage and retrieval system, in which case the fire suppression module 506 may further comprise a transmitter coupled to the actuator arranged to transmit a signal identifying valve actuation to the speaker or alarm.

When the valve actuation comprises a visual indicator, a user may be made aware of valve actuation by observing the visual indicator. In some examples, the visual indicator may be a light illuminated in response to valve actuation. Alternatively, the visual indicator may include a mechanical visual indicator.

Mechanical visual indicators include a bolt-and-window assembly whereby, with the valve unactuated, the window shows a portion of the bolt comprising a colour (e.g., green) or text (e.g., "primed") indicating that the fire suppression module 506 is in a dischargeable (i.e., actuatable) state, and has not yet discharged or actuated. On actuation of the valve, the bolt may move (e.g., translate or rotate) such that a different portion of the bolt is visible in the window. This different portion may comprise a different colour (e.g., red) or text (e.g., "discharged") indicating that the valve has been actuated and fire suppressant has been discharged. The bolt may alternatively be any other movable part, such as a ball or cylinder, where the ball or cylinder is rotated on actuation. In general, the movable part may be mechanically biased to move on valve actuation. Mechanical visual indicators are particularly advantageous in combination with passive actuator means because batteries need not be provided if the movable part is mechanically biased to move on valve actuation.

The visual indicator may be disposed on the fire suppression module 506. For instance, the visual indicator may be disposed on the surface of the fire suppression module 506. Accordingly, when the container 504 is accessed by a user at a packing station, the visual indicator may indicate to a user that the fire suppressant has been discharged into the container 504. This configuration is particularly advantageous when the fire suppressant in the reservoir 512 includes clean, or gaseous, fire suppressant comprising transparent gasses which may not otherwise be visible in the container 504. Accordingly, the visual indicator may signal the user to check the goods stored in the container 504 for fire damage.

Alternatively, the visual indicator may be located outside the grid 100, e.g., within the warehouse containing the automated storage and retrieval system. Accordingly, the fire suppression module 506 may further comprise a transmitter coupled to the actuator arranged to transmit a signal identifying valve actuation to the visual indicator. The visual indicator may further visually identify the location, e.g., a zone of the grid 100, at which the container 504 is stored.

When the valve actuation comprises communicating with a user workstation of the automated storage and retrieval system, the fire suppression module 506 may further comprise a transmitter coupled to the user workstation. The user workstation may include a processing system, such as processing system 400 described with respect to Fig. 4. Accordingly, the user workstation may further indicate the valve actuation to the user via a display 410, or audio device 416. The user workstation may also provide the user with the option to input a command for the container 504 to be delivered to a packing station.

### Retaining a fire suppression module in a container

In Figs. 5A and 5B, the fire suppression module 506 is retained in the container 504 by gravity. That is, when oriented to hold goods in the internal storage space 508, the container 504 retains the fire suppression module 506 against the base 510e thereof by gravity. The fire suppression module 506 may also be shaped to sit flush against at least one sidewall 510a, 510b, 510c, 510d, or at least one corner formed therebetween, which horizontally retains the fire suppression module 506 in the container 504. A horizontal direction is any direction in the plane defined by base 510e of the container 504, which, when provided in the automated storage and retrieval system of Fig. 1, is defined by the X and Y directions 108, 110. For instance, fire suppression module 506 shown in Figs. 5A and 5B is shaped to sit flush against sidewalls 510a, 510c, 510d, the corner formed between sidewalls 510a and 510d, and the corner formed between sidewalls 510c and 510d.

However, in some examples, the fire suppression module 506 may include at least one retaining member. The retaining member is arranged to retain the fire suppression module 506 within the container. For instance, the retaining member may be arranged to retain the fire suppression module 506 against at least one sidewall 510a, 510b, 510c, 510d, the base 510e, or at least one corner formed therebetween. Advantageously, providing a retaining member in the fire suppression module 506 allows the fire suppression module to be more securely retained within the container 504. Further, as the retaining member is part of the fire suppression module 506 itself, the fire suppression module 506 is retainable within and can be retrofit into existing containers.

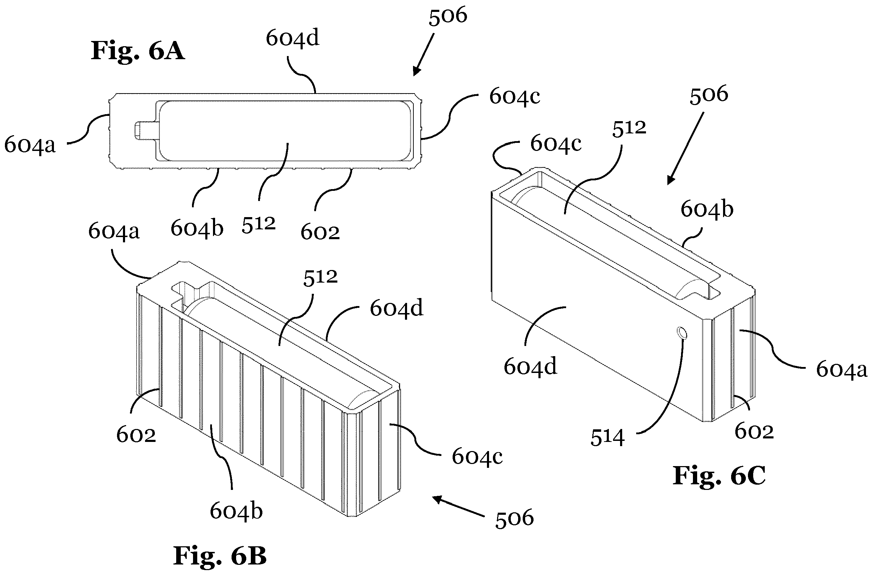

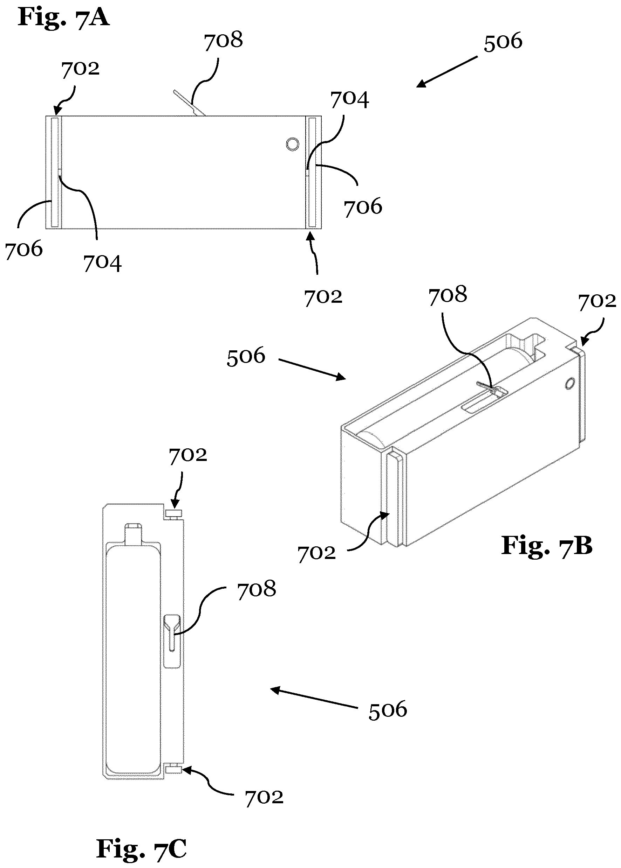

For example, as shown in Figs. 6A-6E, the retaining members may comprise at least one tongue 602. Alternatively, as shown in Figs. 7A-7G the retaining members may comprise at least one pressing member 702. The respective retaining members may be engageable with cooperating portion of the stackable container 504. For instance, the at least one tongue 602 shown in Figs. 6A-6E is sheathable within corresponding groove(s) 606 in the container 504. Similarly, the at least one pressing member 702 shown in Figs. 7A-7G are arranged to wedge the fire suppression module between opposing walls 510a, 510c (that is, opposing sidewalls) of the container 504. The examples shown in Figs. 6A-7G are otherwise as described with respect to Figs. 5A and 5B, where like reference numerals are used to identify like components.

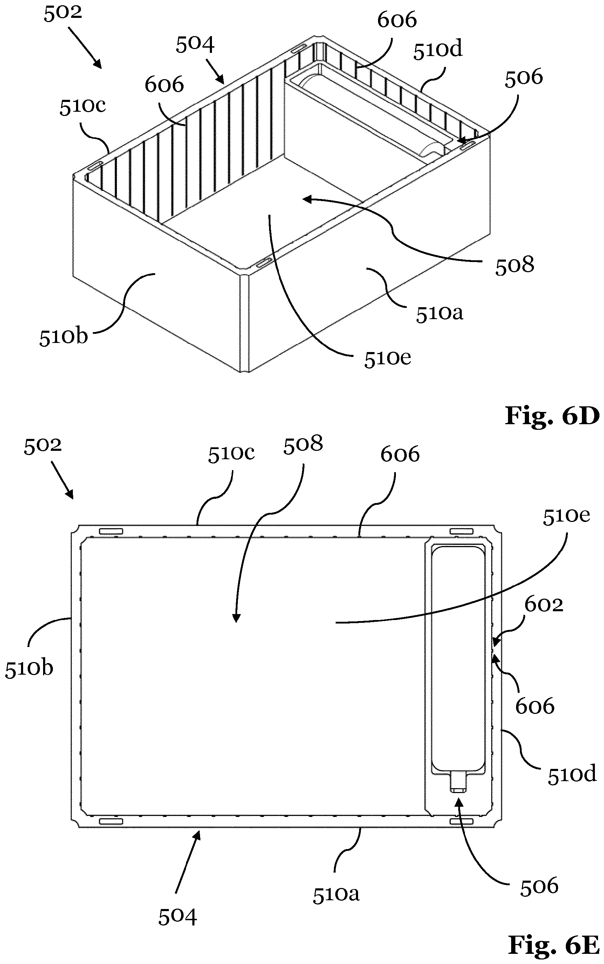

Referring to Figs. 6A-6C, a fire suppression module 506 including at least one tongue 602 is respectively depicted in top view, perspective view and reverse perspective view. The perspective view in Fig 6C is from the opposite direction to the perspective view in Fig. 6B. A plurality of tongues 602 may be provided, as shown in Figs. 6A-6C. Each tongue 602 comprises a protrusion from a surface 604a, 604b, 604c of the fire suppression module 506. As shown, the tongue 602 maybe elongate, i.e., long in relation to its width (where length is measured with respect to the height of the fire suppression module 506, perpendicular to a horizontal direction). The tongue 602 may span the height of the fire suppression module 506 - as measured perpendicular to any horizontal direction when the fire suppression module 506 is retained in the container 504 - or a portion thereof. However, as described with respect to Figs. 6D and 6E, the tongue 602 may take substantially any shape sheathable within the groove 606 in the container 504.

A plurality of tongues 602 may be provided on one or more surfaces 604a, 604b, 604c of the fire suppression module 506. As shown in Figs. 6A-6C, the tongues 602 may be provided on three surfaces 604a, 604b, 604c. More generally, the tongues 602 may be provided on any or all surfaces 604a, 604b, 604c arranged to sit flush against a sidewall 510a, 510b, 510c, 510d or base 510c of the container 504 with the outlet disposed to deliver fire suppressant from the fire suppressant reservoir 512 into the internal storage space 508.

At least one surface 604d of the sidewall may be provided substantially free of tongues 602. As shown, the free surface 604d may include the outlet 514. In other words, the outlet 514 may be provided in a smooth surface 604d of the fire suppression module 506. A smooth surface is one that is free or substantially free of tongues 602. The smooth surface may be substantially free of tongues when tongs 602 are, at most, located at the surface's respective sides, such as at the surface's outer periphery or outer sections (e.g., outer quarters). Advantageously, providing the outlet 514 in a smooth surface 604d of the fire suppression module 506, free of tongues 602, ensures the fire suppression module 506 is correctly oriented when retained in the container 504, such that the outlet is disposed to deliver fire suppressant from the fire suppressant reservoir into the internal storage space upon actuation of the actuatable valve. Accordingly, the outlet 514 being in a smooth surface 604d, free of tongues 602, prompts a user retaining the fire suppression module 506 in the container, to avoid positioning the smooth surface flush against a sidewall 510a, 510b, 510c, 510d or base 510e.

Referring to Figs. 6D and 6E, an apparatus 502 is respectively depicted in perspective view and top view. The apparatus 502 is as described with respect to Figs. 5A and 5B and includes a container 504 and a fire suppression module 506. The fire suppression module 506 includes at least one tongue 602, as described with respect to Figs. 6A-6C.

As shown, the container 504 of Figs. 6D and 6E comprises at least one groove 606. The grooves 606 are cooperating portions of the container 504 which cooperate with the tongue(s) 602. The grooves 606 may be provided as recessed portions in the respective internal faces of the at least one sidewall 510a, 510b, 510c, 510d or base 510e. Here, the internal faces are those facing the internal storage space 508. Like the tongue 502, the grooves 606 may be elongate, i.e., long in relation to their width (where length is measured with respect to container 504 height). Accordingly, the grooves 606 may span the height of the container 504 - as measured perpendicular to any horizontal direction - or a portion thereof.

The grooves 606 may be provided in every sidewall 510a, 510b, 510c, 510d and base 510e. However, in some examples, grooves 606 may only be provided in some sidewalls 510a, 510b, 510c, 510d and/or the base 510oe, or a portion thereof. For instance, the grooves 606 may only be provided in two opposing walls, such as (longer) sidewalls 510a and 510c, or (shorter) sidewalls 510b and 510d, or a portion thereof. Alternatively, the grooves maybe provided in three walls such as sidewalls 510a, 510c and 510d, or a portion thereof.

By providing the grooves 606 in at least two opposing walls, the grooves 606 may otherwise be suitable for retaining at least one detachable compartment-separating wall. A detachable compartment-separating wall, when provided in the container, spans the internal storage space 508 between two opposing grooves 606, to separate the internal storage space 508 into compartments. The detachable walls may be arranged such that they can be removed or folded into the bottom of the compartment such that the size of the compartment of the storage container may be adjusted.

The detachable compartment-separating wall may be provided as part of the automated storage and retrieval system to which the fire suppression module 506 maybe retrofit. Accordingly, the containers 504 of the automated storage and retrieval system may comprise the grooves 606 suitable for retaining at least one detachable compartment-separating wall prior to the provision of fire suppression module 506. An advantage of the fire suppression module 506 described with respect to Figs. 6A-6C in combination with grooves 606 suitable for retaining at least one detachable compartment-separating wall is therefore that the fire suppression module 506 can be easily retrofit to containers 504 in existing automated storage and retrieval systems by leveraging the grooves 606 suitable for retaining at least one detachable compartment-separating wall.

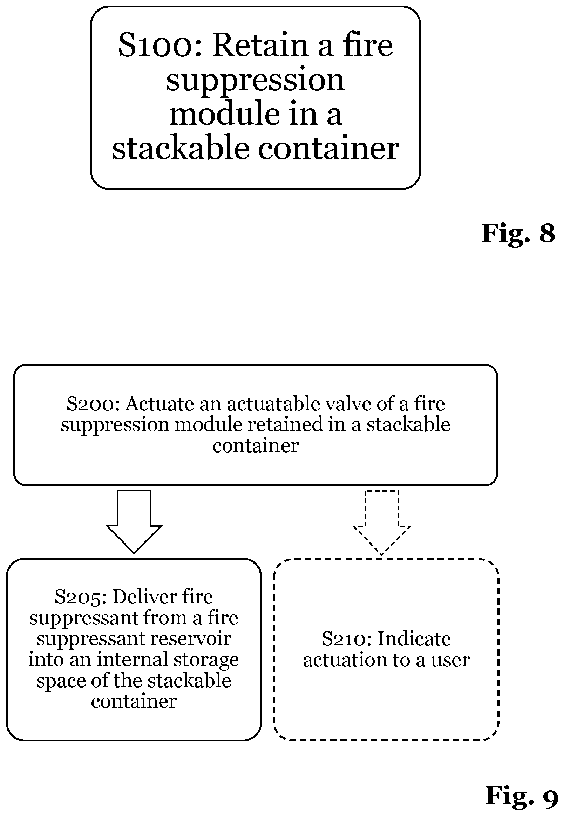

In operation, as described with respect to Fig. 8, the apparatus 502 shown in Figs. 6D and 6E can be formed by retaining the fire suppression module 506 in the stackable container 504 by sheathing (e.g. encasing or otherwise covering) the tongue(s) 602 of the fire suppression module 506 with the respective groove(s) 606 of the container 504. Tongue(s) 602 sheathed in groove(s) 606 are shown in Fig. 6E. Accordingly, the tongue(s) 602 of the fire suppression module 506 are shaped to correspond, i.e., cooperate, with the groove(s) 606 of the container 504 (and vice-versa). The tongue(s) 602 may therefore take substantially any cross section (such as square, rectangular or semi-circular), provided the tongue(s) 602 are sheathable in the groove(s) 606 of the container 504.

Accordingly, the tongue 602 and groove 606 retaining members of the fire suppression module 506 and stackable container 504 described herein allow a user to easily retain the fire suppression module 506 in the stackable container 504. In particular, the tongue(s) 602 and groove(s) 606 are oriented in the sheathing direction, i.e., into the internal storage space 508. This direction is perpendicular, substantially perpendicular, or otherwise deviating from a horizontal direction. As described, a horizontal direction is any direction in the plane defined by base 510c of the container 504, which, when the container 504 is provided in the automated storage and retrieval system of Fig. 1, is defined by the X and Y directions 108, 110.

Accordingly, the tongue(s) 602 and groove(s) 606 horizontally retain the fire suppression module 506 in the container 504 to prevent horizontal movement of the fire suppression module 506. This is advantageous because, in normal operation, the container 504 experiences the greatest acceleration, and therefore the greatest force, when transported along the top of the grid 100 to and/or from a port column 126, 128 by robots 122 (as described with respect to Fig. 1). The container 504 is transported along the top of the grid in a horizontal direction. As such, the retaining members are particularly advantageous in preventing horizontal movement due to the forces experienced by the container 504 in normal operation, while also allowing the user to easily retain the fire suppression module 506 in the stackable container 504.

Referring to Figs. 7A-7C, a fire suppression module 506 including at least one pressing member 702 is respectively depicted in side view, perspective view and top view. As depicted, two pressing members 702 may be provided, for instance at opposing flanks (e.g., opposing sides) of the fire suppression module 506. Alternatively, only one pressing member 702 may be provided. Each pressing members 702 may comprise a protractible strut 704 joined, at an end thereof, to a presser plate 706. The presser plate 706 may be shaped substantially rectangular, ovular, or rectangular with rounded edges. A long dimension of the presser plate 706 may span substantially the entire height of the fire suppression module to increase contact area of the presser plate 706 with the container 504, when retained in the container, thereby increasing the retaining capabilities of the pressing member 702.

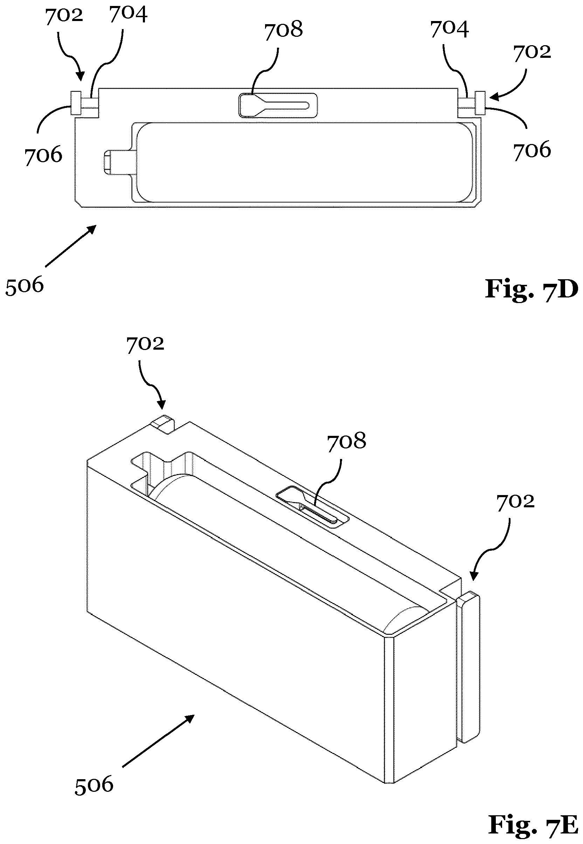

The protractible strut 704 of the pressing member 702 may be spring loaded or otherwise biased into a pressing (i.e., extended) position. In some examples, the pressing member 702 may be biased into a pressing position in response to activation of a switch 708. For instance, Figs. 7D and 7E show the fire suppression module 506 of Figs. 7A-7C in a pressing position, following activation of switch 708. The switch 708 shown in Figs. 7A-7E takes the form of a lever that, when depressed, mechanically biases the protractible strut 704 into a pressing position. When in a pressing position, the pressing member 702 extends away from the fire suppression module 506. Accordingly, when in a pressing position, the pressing member 702 is arranged to exert pressure away from the fire suppression module 506. When two pressing members 702 are provided, each pressing member may be arranged to exert pressure away from the fire suppression module 506 in opposing directions. In a pressing position, the protractible strut 704 (when provided) is arranged to extend away from the fire suppression module 506. When two pressing members 702 are provided, the respective protractible struts 704 extend away from the fire suppression module 506 in opposite directions respectively. In this configuration, when in a pressing position the respective presser plates 706 are arranged to exert pressure in opposite directions, away from the fire suppression module 506. Conversely, in a non-pressing position, the pressing member 702 is in a shortened position.

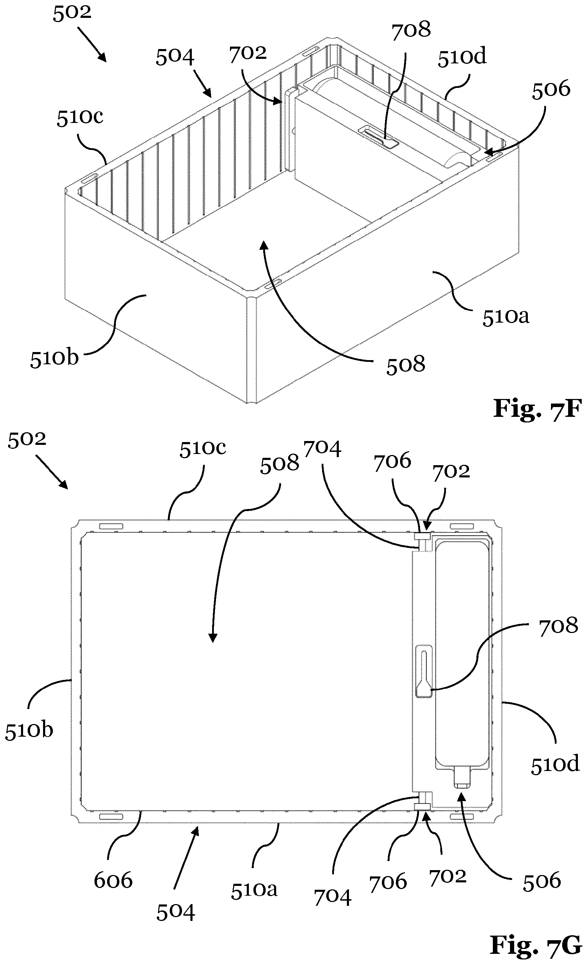

Referring to Figs. 7F and 7G, an apparatus 502 is respectively depicted in perspective view and top view. The apparatus 502 is as described with respect to Figs. 5A and 5B and includes a container 504 and a fire suppression module 506. As shown, the sidewalls of the container 504 may include grooves 606, as described with respect to Figs. 6D and 6E. Accordingly, the sidewalls may also be arranged to retain a detachable compartment-separating wall in the internal storage space. The fire suppression module 506 includes at least one pressing member 702, as described with respect to Figs. 7A-7E.

The container 504 of Figs. 7F and 7G comprises opposing sidewall pairs 510a and 510c, and 510b and 510d. These opposing sidewall pairs are cooperating portions of the container 504 which cooperate with the pressing member(s) 702. Accordingly, when disposed in the container 504 and arranged in a pressing position, the pressing member(s) 702 push (i.e., exert pressure) against opposing sidewall pairs. As such, the pressing member(s) 702 wedge the fire suppression module 506 within the container 504 between the opposing walls. Accordingly, the fire suppression module 506 is retained in the container 504 by friction between the presser plates 706 and the internal faces of the opposing sidewall pairs. In some examples, the pressing member(s) 702 may have a tacky, elastomeric and/or tactile surface to increase the friction between the pressing member(s) 702 and the internal faces of the opposing sidewall pairs. The tacky, elastomeric and/or tactile surface may be provided on the presser plate(s) 706.

When only one pressing member 702 is provided, the pressing member 702 pushes against one sidewall, and the opposing flank of the fire suppression module 506 pushes against the opposing sidewall. As such, the fire suppression module 506 is wedged between the opposing walls by the pressing member 702 and the opposing flank of the fire suppression module 506. The fire suppression module 506 is thereby retained in the container 504 by friction between the presser plate 706 of the pressing member 502 and one sidewall, and between the fire suppression module 506 and the internal face of the opposing sidewall.

In operation, as described with respect to Fig. 8, the apparatus 502 shown in Figs. 7F and 7G can be formed by retaining the fire suppression module 506 in the stackable container 504 by wedging the fire suppression module 506 between opposing walls. Here, wedging the fire suppression module 506 between the opposing walls may comprise inserting the fire suppression module 506 into the internal storage space 508 of the container 504 in a non-pressing position. In the non-pressing position, the pressing member 702 (e.g., the protractible strut 704 thereof) is in a shortened position. In this position, the switch 708 may be inactivated (e.g., the lever may be raised). Alternatively, if a switch is not provided, springs or other mechanical biasing means in the pressing member 702 may be pulled back. Once inserted into the container 504, the fire suppression module 506 may be brought into a pressing position, thereby retaining the fire suppression module 506 in the stackable container. For instance, the springs or other mechanical biasing means may be released, or the switch 708 may be activated (e.g., the lever may be depressed).

Accordingly, the pressing member 702 of the fire suppression module 506 described herein allows a container-agnostic method of easily retaining a fire suppression module 506 in the stackable container 504. For instance, the pressing members 702 allow the fire suppression module 506 to be retained within the stackable container 504 independent of whether grooves 606 or other structures are provided in the container 504. As the pressing member is retain by friction, the pressing members 702 horizontally and vertically retain the fire suppression module 506 in the container 504 to prevent horizontal and vertical movement of the fire suppression module 506. As such, the pressing members 702 prevent movement due to the forces experienced by the container 504 in normal operation.

### Methods of forming an apparatus for an automated storage and retrieval system

Fig. 8 depicts a flowchart of an example method of forming an apparatus for an automated storage and retrieval system, such as the system of Fig. 1. The apparatus may be as described with respect to any of Figs. 5A, 5B, 6D, 6E, 7F, and/or 7G. The method comprises one step, S100. Step S100 involves retaining a fire suppression module in a stackable container, where the stackable container comprises an internal storage space. For instance, step S100 may comprise retaining the fire suppression module in the internal storage space of the stackable container.

The fire suppression module and stackable container may respectively be as described in relation to any of Figs. 5A-7G. As such, the fire suppression module comprises a fire suppressant reservoir, an actuatable valve, and an outlet in communication with the actuatable valve. The actuatable valve is disposed to selectively isolate the fire suppressant reservoir from the outlet. Accordingly, retaining the fire suppression module in the stackable container in step S100 disposes the outlet to deliver fire suppressant from the fire suppressant reservoir into the internal storage space upon actuation of the actuatable valve.

In some examples, retaining the fire suppression module in the stackable container in step S100 comprises engaging a retaining member of the fire suppression module with a cooperating portion of the stackable container. The retaining member may include a tongue and the cooperating portion may include a groove, as described with respect to Figs. 6A-6E. Additionally or alternatively, the retaining member may include at least one pressing member and the cooperating portion may include opposing walls (i.e., opposing sidewalls of the container), as described with respect to Figs. 7A-7G.

When the retaining member includes a tongue and the cooperating portion includes a groove, retaining the fire suppression module in the stackable container in step S100 comprises sheathing (e.g., encasing or otherwise covering) the tongue in the groove.

When the retaining member includes at least one pressing member and the cooperating portion includes opposing walls, retaining the fire suppression module in the stackable container in step S100 comprises wedging the fire suppression module between opposing walls of the container. As discussed with respect to Figs. 7A-7G, wedging the fire suppression module between the opposing walls may comprise inserting the fire suppression module into the internal storage space of the container in a non-pressing position. Once inserted into the container, the fire suppression module may be brought into a pressing position, thereby retaining the fire suppression module in the stackable container. Bringing the fire suppression module into a pressing position may include releasing springs or other mechanical biasing means in the fire suppression module, or activating a switch in the fire suppression module (e.g., depressing a lever).

### Methods of suppressing fire in a stackable container for an automated storage and retrieval system

Fig. 9 depicts a flowchart of an example method of suppressing fire in a stackable container for an automated storage and retrieval system, such as the system of Fig. 1. The stackable container is part of an apparatus, as described with respect to any of Figs. 5A, 5B, 6D, 6E, 7F, and/or 7G. The method depicted in Fig. 9 maybe carried out subsequent to the method of Fig. 8.

The method starts at step S200 in which an actuatable valve of a fire suppression module retained in the stackable container is actuated. The actuatable valve, fire suppression module, and stackable container are as described with respect to Figs. 5A-7G. As such, the stackable container comprises an internal storage space and the actuatable valve is disposed to selectively isolate a fire suppressant reservoir of the fire suppression module from an outlet of the fire suppression module.

Optionally, step S200 may include automatically actuating the actuatable valve in response to an actuation condition. As described with respect to Figs. 5A and 5B, the actuation condition may comprise one or more of smoke detection, an elevation in temperature, flame detection, and/or a signal from a fire detection system. In particular, the actuatable valve may comprise a fusible element and the condition indicative of fire may comprise an elevation in temperature to a predetermined temperature.

The method continues to step S205 in which, responsive to actuating the actuatable valve, fire suppressant is delivered from the fire suppressant reservoir into the internal storage space of the container. In this step, the fire suppressant is discharged from the outlet of the fire suppression module into the internal storage space, thereby suppressing a fire in the container. The fire suppressant may be discharged through any type of outlet, for instance as described herein with respect to Figs. 5A and 5B.

Optionally, the method includes step S210 in which, responsive to actuating the actuatable valve, valve actuation is indicated to a user of the automated storage and retrieval system. Valve actuation may be indicated by any valve actuation indicator, as discussed with respect to Figs. 5A and 5B. For instance, indicating valve actuation may include one or more of: sounding a speaker or an alarm; illuminating a light or activating a mechanical visual indicator; and/or transmitting a signal to a user workstation of the automated storage and retrieval system.

As shown in Fig. 9, step S210 may be carried out in parallel or substantially in parallel with step S205. However, in other examples, step S210 may be carried out sequentially before or after step S205. In general, step S210 may be wholly independent of step S205. Alternatively, step S210 may be in response to step S205.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Further, the disclosure includes the following clauses:
Clause 1. A stackable container fire suppression module configured to be retained in a stackable container, the stackable container fire suppression module comprising:
   a fire suppressant reservoir;
   an actuatable valve; and
   an outlet in communication with the actuatable valve,
   wherein the actuatable valve is disposed to selectively isolate the fire suppressant reservoir from the outlet.
Clause 2. The fire suppression module of clause 1, wherein the actuatable valve is arranged to automatically actuate in response to an actuation condition.
Clause 3. The fire suppression module of clause 2, wherein the actuatable valve comprises a fusible element and the actuation condition comprises an elevation in temperature to a predetermined temperature.
Clause 4. The fire suppression module of any previous clause, wherein the actuation condition comprises smoke detection, an elevation in temperature, flame detection, and/or a signal from a fire detection system.
Clause 5. The apparatus of any previous clause, wherein the outlet comprises a fire suppression nozzle arranged to fragment fire suppressant into droplets.
Clause 6. The apparatus of any previous clause, wherein the fire suppression module is reversibly retainable in the stackable container.
Clause 7. An apparatus for an automated storage and retrieval system, the apparatus comprising:
   a stackable container comprising an internal storage space; and
   a fire suppression module according to any previous clause,
   wherein, with the fire suppression module retained in the stackable container, the outlet is disposed to deliver fire suppressant from the fire suppressant reservoir into the internal storage space upon actuation of the actuatable valve.
Clause 8. The apparatus of clause 7, wherein the fire suppression module comprises a retaining member engageable with a cooperating portion of the stackable container. Clause 9. The apparatus of clause 8, wherein the cooperating portion comprises a groove and the retaining member comprises a tongue sheathable within the groove.
Clause 10. The apparatus of clause 8, wherein the cooperating portion comprises opposing walls and the retaining member comprises at least one pressing member arranged to wedge the fire suppression module between the opposing walls.
Clause 11. The apparatus of any of clauses 8-10, wherein the cooperating portion is arranged to retain a detachable compartment-separating wall in the internal storage space.
Clause 12. The apparatus of any of clauses 7-11, further comprising a valve actuation indicator, wherein the valve actuation indicator comprises one or more of: a speaker, an alarm, a visual indicator, and/or a transmitter arranged to communicate with a user workstation of the automated storage and retrieval system.
Clause 13. An automated storage and retrieval system comprising:
   a frame defining a plurality of storage columns for receiving stacks of storage containers; and
   a stack of storage containers received within a storage column, wherein the stack of storage containers comprises the apparatus according to any of clauses 7-12.
Clause 14. A method of forming an apparatus for an automated storage and retrieval system, the method comprising:
   retaining a fire suppression module in a stackable container, the stackable container comprising an internal storage space,
   wherein the fire suppression module comprises a fire suppressant reservoir, an actuatable valve, and an outlet in communication with the actuatable valve, the actuatable valve being disposed to selectively isolate the fire suppressant reservoir from the outlet, and
   wherein retaining the fire suppression module in the stackable container disposes the outlet to deliver fire suppressant from the fire suppressant reservoir into the internal storage space upon actuation of the actuatable valve.
Clause 15. The method of clause 14, wherein retaining the fire suppression module in the stackable container comprises retaining the fire suppression module in the internal storage space of the stackable container.
Clause 16. The method of clause 14 or clause 15, wherein retaining the fire suppression module in the stackable container comprises engaging a retaining member of the fire suppression module with a cooperating portion of the stackable container.
Clause 17. The method of clause 16, wherein the cooperating portion comprises a groove and the retaining member comprises a tongue, and retaining the fire suppression module in the stackable container comprises sheathing the tongue in the groove.
Clause 18. The method of clause 16, wherein the cooperating portion comprises opposing walls and the retaining member comprises at least one pressing member, and retaining the fire suppression module in the stackable container comprises wedging the fire suppression module between the opposing walls.
Clause 19. A method of suppressing fire in a stackable container for an automated storage and retrieval system, the method comprising:
   actuating an actuatable valve of a fire suppression module retained in the stackable container, wherein the stackable container comprises an internal storage space and the actuatable valve is disposed to selectively isolate a fire suppressant reservoir of the fire suppression module from an outlet of the fire suppression module; and
   responsive to actuating the actuatable valve, delivering fire suppressant from the fire suppressant reservoir into the internal storage space.
Clause 20. The method of clause 19, wherein actuating the actuatable valve comprises automatically actuating the actuatable valve in response to an actuation condition.
Clause 21. The fire suppression module of clause 20, wherein: the actuatable valve comprises a fusible element and the actuation condition comprises an elevation in temperature to a predetermined temperature; and actuating the actuatable valve comprises fusing the fusible element in response to the elevation in temperature.
Clause 22. The method of clause 20 or clause 21, wherein the actuation condition comprises smoke detection, an elevation in temperature, flame detection, and/or a signal from a fire detection system.
Clause 23. The method of any of clauses 19-22, further comprising, responsive to actuating the actuatable valve, indicating actuation to a user of the automated storage and retrieval system.
Clause 24. The method of clause 23, wherein indicating actuation to a user comprises one or more of:
   sounding a speaker or an alarm;
   illuminating a light or activating a mechanical visual indicator; and/or
   transmitting a signal to a user workstation of the automated storage and retrieval system.

## Claims

1. A stackable container fire suppression module configured to be retained in a stackable container, the stackable container fire suppression module comprising:
a fire suppressant reservoir;
an actuatable valve; and
an outlet in communication with the actuatable valve,
wherein the actuatable valve is disposed to selectively isolate the fire suppressant reservoir from the outlet.

2. The fire suppression module of claim 1, wherein the actuatable valve is arranged to automatically actuate in response to an actuation condition.

3. The fire suppression module of claim 1 or claim 2, wherein the actuation condition comprises smoke detection, an elevation in temperature, flame detection, and/or a signal from a fire detection system.

4. The apparatus of any previous claim, wherein the outlet comprises a fire suppression nozzle arranged to fragment fire suppressant into droplets.

5. The apparatus of any previous claim, wherein the fire suppression module is reversibly retainable in the stackable container.

6. An apparatus for an automated storage and retrieval system, the apparatus comprising:
a stackable container comprising an internal storage space; and
a fire suppression module according to any previous claim,
wherein, with the fire suppression module retained in the stackable container, the outlet is disposed to deliver fire suppressant from the fire suppressant reservoir into the internal storage space upon actuation of the actuatable valve.

7. The apparatus of claim 6, wherein the fire suppression module comprises a retaining member engageable with a cooperating portion of the stackable container.

8. The apparatus of claim 7, wherein either:
the cooperating portion comprises a groove and the retaining member comprises a tongue sheathable within the groove; and/or
the cooperating portion comprises opposing walls and the retaining member comprises at least one pressing member arranged to wedge the fire suppression module between the opposing walls.

9. The apparatus of claim 7 or claim 8, wherein the cooperating portion is arranged to retain a detachable compartment-separating wall in the internal storage space.

10. The apparatus of any of claims 6-9, further comprising a valve actuation indicator, wherein the valve actuation indicator comprises one or more of: a speaker, an alarm, a visual indicator, and/or a transmitter arranged to communicate with a user workstation of the automated storage and retrieval system.

11. An automated storage and retrieval system comprising:
a frame defining a plurality of storage columns for receiving stacks of storage containers; and
a stack of storage containers received within a storage column, wherein the stack of storage containers comprises the apparatus according to any of claims 6-10.

12. A method of forming an apparatus for an automated storage and retrieval system, the method comprising:
retaining a fire suppression module in a stackable container, the stackable container comprising an internal storage space,
wherein the fire suppression module comprises a fire suppressant reservoir, an actuatable valve, and an outlet in communication with the actuatable valve, the actuatable valve being disposed to selectively isolate the fire suppressant reservoir from the outlet, and
wherein retaining the fire suppression module in the stackable container disposes the outlet to deliver fire suppressant from the fire suppressant reservoir into the internal storage space upon actuation of the actuatable valve.

13. The method of claim 12, wherein retaining the fire suppression module in the stackable container comprises engaging a retaining member of the fire suppression module with a cooperating portion of the stackable container.

14. The method of claim 13, wherein either:
the cooperating portion comprises a groove and the retaining member comprises a tongue, and retaining the fire suppression module in the stackable container comprises sheathing the tongue in the groove; and/or
the cooperating portion comprises opposing walls and the retaining member comprises at least one pressing member, and retaining the fire suppression module in the stackable container comprises wedging the fire suppression module between the opposing walls.

15. A method of suppressing fire in a stackable container for an automated storage and retrieval system, the method comprising:
actuating an actuatable valve of a fire suppression module retained in the stackable container, wherein the stackable container comprises an internal storage space and the actuatable valve is disposed to selectively isolate a fire suppressant reservoir of the fire suppression module from an outlet of the fire suppression module; and
responsive to actuating the actuatable valve, delivering fire suppressant from the fire suppressant reservoir into the internal storage space.
